# EUROPEAN PATENT APPLICATION

(11) **EP 1 345 118 A2**
(43) Date of publication of application: **17.09.2003**
(21) Application number: 03003676.8
(22) Date of filing: 18.02.2003
(51) Int. Cl.: G06F 9/445

(54) **System and method for creating and downloading a backup drive image onto a hard disk via network**

(30) Priority: 20.02.2002 US 79785
(71) Applicant: Gateway, Inc., North Sioux City, South Dakota 57049 (US)
(72) Inventor: Kroening, James L., Dakota Dunes, SD 57049 (US)
(74) Representative: Viering, Jentschura & Partner

(57) **Abstract**

A system for generating and loading software onto hard disk drives, particularly replacement hard disk drives without having to create a separate master disk for each unique software configuration, includes a storage assembly for storing at least one of a predefined drive image and a software component. An image builder is coupled to the storage assembly within the network for building a drive image for the hard disk drive using at least one of the predefined drive image and the software component. The created drive image is then stored to the storage assembly and downloaded to the hard disk drive via the network.

## Description

### FIELD OF THE INVENTION

The present invention generally relates to information handling systems such as personal computer systems, network servers, and the like, and particularly to a system and method for generating and loading software onto the hard disk drives of such systems.

### BACKGROUND OF THE INVENTION

At times, it may be necessary to replace a hard disk drive of an information handling system such as a personal computer, network server or the like due to failure of the drive. Manufacturers of such information handling systems often provide replacement hard disk drives for their customers. These replacement drives are loaded with the software provided with the original hard disk drive when the information handling system was manufactured.

When replacement hard disk drives are produced, a manufacturer may often take advantage of common software configurations when loading software. A computer system is set up as a model system having the desired software configuration that is required by the replacement hard disk drive. In this manner, a master disk is created from which the replacement hard disk drive may be copied. Once this master disk is created, it may be stored for use in creating additional replacement hard disk drives requiring the same or a similar configuration.

Over time, manufacturers of information handling systems may produce systems having a wide variety of software configurations. Consequently, such manufacturers may generate a large number of master disks for common configuration. Each of these master disks must be stored and cataloged. Moreover, customers may order specialized software in addition to the software provided as part of one of the common configurations. When a replacement hard disk drive is later ordered, this software must be loaded by hand, provided in addition to the replacement hard disk drive for the customer to load, or incorporated into a new master disk. This results in increased expense for the manufacturer and customer and may cause replacement hard disk drives to be delivered which are configured differently than the disks they replace leading to customer confusion and dissatisfaction.

Therefore, it would be desirable to provide a system and process for creating a desired replacement hard disk drive without having to create a separate master disk for each unique software configuration. This would save time and expense for a manufacturer and would allow replacement disk drives to be provided that are a more exact copy of the hard disk drive they are to replace.

### SUMMARY OF THE INVENTION

Accordingly, the present invention is directed to a system and method for generating and loading software onto hard disk drives. The system and method may be particularly useful in loading software onto replacement hard disk drives without having to create a separate master disk for each unique software configuration.

In a first aspect of the present invention, a system for loading software onto a hard disk drive via a network is provided. The system includes a storage assembly for storing at least one of a predefined drive image and a software component. An image builder is coupled to the storage assembly within the network for building a drive image for the hard disk drive using at least one of the predefined drive image and the software component. The created drive image is then stored to the storage assembly and downloaded to the hard disk drive via the network. In exemplary embodiments of the invention, the system includes at least two image builders coupled to the storage assembly in a fibre arbitrated loop within the network. The storage assembly may comprise a hard disk drive Fibre Channel tower having a plurality of Fibre Channel hard disk drives arranged into a first group, a second group, and a third group of Fibre Channel hard disk drives, wherein the first group of Fibre Channel hard disk drives is used for storage of the predefined drive image and software component while the second and third groups are alternately used for generation and storage of the created drive image.

In a second aspect of the present invention, a method for loading software onto a hard disk drive is provided. The method includes steps for storing at least one of a predefined drive image and a software component on a storage assembly; receiving a drive image definition defining a drive image to be created; building the drive image using at least one of the predefined drive image and the software component, the created drive image being stored by the storing means; and downloading the built drive image directly to the hard disk drive from the storage assembly via a network. In exemplary embodiments of the invention, the storage assembly comprises a hard disk drive Fibre Channel tower having a plurality of Fibre Channel hard disk drives arranged into a first group, a second group, and a third group of Fibre Channel hard disk drives, wherein the first group of Fibre Channel hard disk drives is used for storage of the predefined drive image and software component while the second and third groups are used for generation and storage of the created drive image. The drive image is built by storing the predefined drive image to one of the second group and the third group of Fibre Channel hard disk drives and adding the software component to the predefined drive image. A second drive image for a second hard disk drive may then be built as the first drive image is downloaded to the first hard disk drive by storing one of the predefined drive image and a second predefined drive image to the other of the second group and the third group of Fibre Channel hard disk drives and adding at least one of the software component and a second software component to the stored predefined drive image or second predefined drive image. The second drive image is then downloaded to the second hard disk drive from the storage assembly via the network. The method may be repeated, alternating between the second and third groups, for building drive images for other hard disk drives.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:
FIG. 1 is a block diagram illustrating a system for duplicating hard disk drives in accordance with an exemplary embodiment of the present invention;
FIGS. 2A and 2B are block diagrams illustrating implementation of the system for duplicating hard disk drives as shown in FIG. 1;
FIGS. 3A, 3B and 3C are flow diagrams illustrating a process for duplicating hard disk drives in accordance with an exemplary embodiment of the present invention;
FIG. 4 is a block diagram illustrating the structure of an exemplary disk image;
FIG. 5 is a block diagram illustrating an exemplary identification scheme for a disk image structure; and
FIG. 6 is a block diagram illustrating an exemplary information handling system in accordance with an exemplary embodiment of the present invention.

### DETAILED DESCRIPTION OF THE INVENTION

Reference will now be made in detail to the presently preferred embodiments of the invention, examples of which are illustrated in the accompanying drawings.

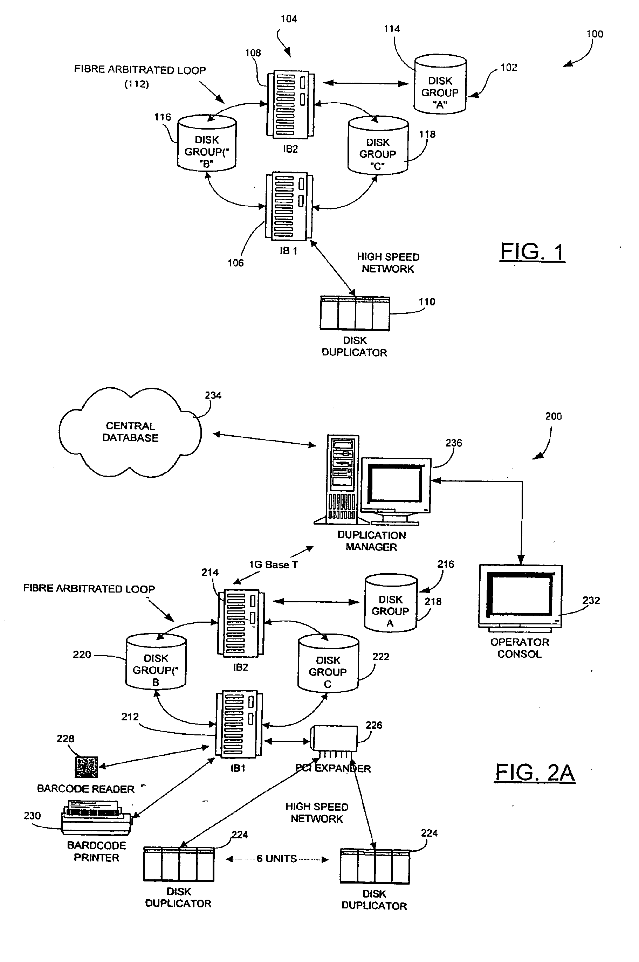

Referring now to FIG. 1, a system for building and delivering software to a hard disk drive in accordance with exemplary embodiments of the present invention are described. The system 100 is comprised of at least one storage assembly 102 for storing at least one of a predefined drive image and a software component within a high-speed network 104 such as a Fibre-Channel network, or the like. One or more image builders 106 & 108 are coupled to the storage assembly 102 within the network 104 for building a drive image for the hard disk drive 110 using at least one of the predefined drive image and the software component. The created drive image is then stored to the storage assembly 102 and marked as a master image for use by the disk duplicator 110. In exemplary embodiments of the invention, the system 100 includes at least two image builders 106 & 108 coupled to the storage assembly 102 in a fibre arbitrated loop 112 within the network 104. The storage assembly 102 may comprise a hard disk drive Fibre Channel tower having a plurality of Fibre Channel hard disk drives arranged into a first group, a second group, and a third group of Fibre Channel hard disk drives (e.g., "DISK GROUP A" 114, "DISK GROUP B" 116 and "DISK GROUP C" 118), wherein the first group of Fibre Channel hard disk drives (e.g., "DISK GROUP A" 114) is used for storage of the predefined drive image and software component while the second and third groups (e.g., "DISK GROUP B" 116 and "DISK GROUP C" 118) are alternately used for generation and storage of the created master drive image. The master image will then substitute for the physical master on the disk duplicator 224.

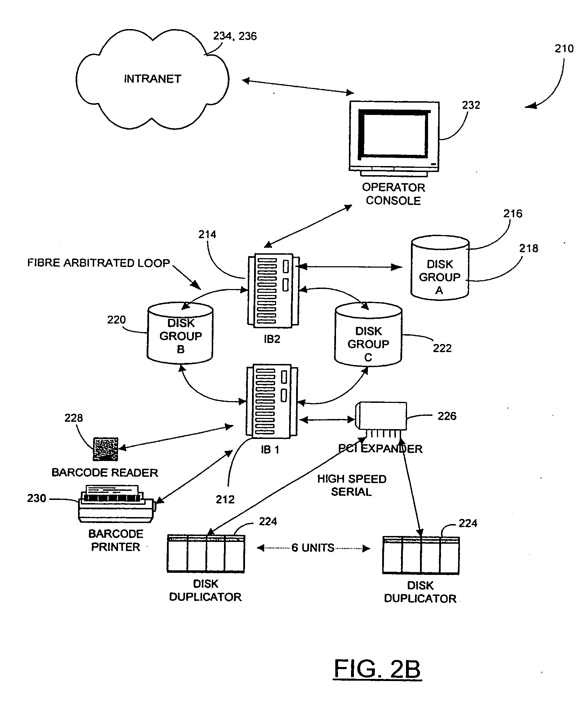

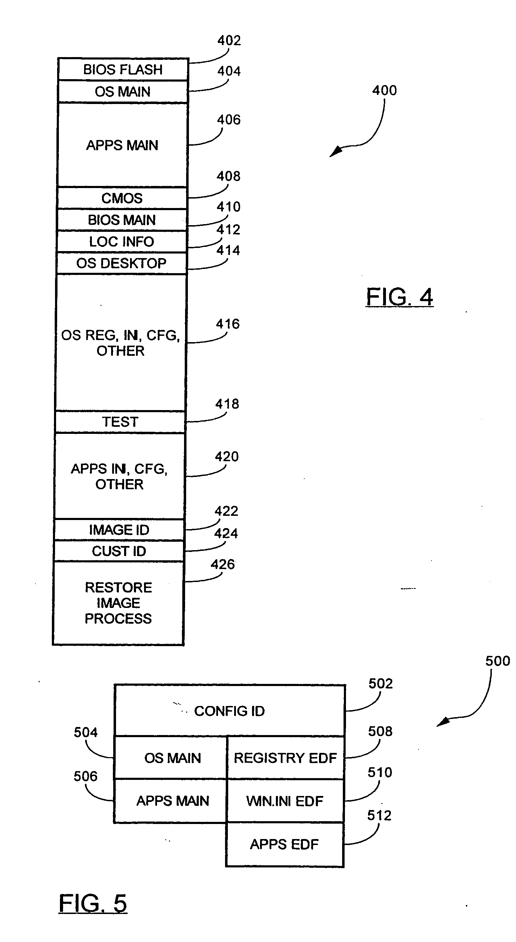

FIGS. 2A and 2B illustrate exemplary implementations of system 100 illustrated in FIG. 1 to provide network master disk duplicating systems 200 & 210 suitable for use in duplicating multiple disk drives, for example, in commercial applications. As shown in FIGS. 2A and 2B, image builders 212 & 214 may comprise information handling systems (see FIG. 5) coupled to a hard drive Fibre Channel tower 216 through a suitable connection device such as a high speed bus peripheral controller, or the like. For instance, in the embodiment shown, image builders 212 & 214 are coupled to a hard drive Fibre Channel tower 216 through a Fibre Channel PCI (Peripheral Component Interconnect) controller, or the like. Hard drive Fibre Channel tower 216 includes eight fibre hard disks having a memory capacity or size of at least 9 GB each. As described in the discussion of FIG. 1, these fibre hard disks may be arranged into a first group, a second group, and a third group of Fibre Channel hard disk drives (e.g., "DISK GROUP A" 218, "DISK GROUP B" 220 and "DISK GROUP C" 222).

Network master disk duplicating systems 200 & 210 further include one or more disk duplicators 224 coupled to image builders 212 & 214 via a high-speed bus. For instance, in the embodiment shown, six disk duplicators are coupled to image builders 212 & 214 via a high-speed fibre PCI controller 226. Each disk duplicator 224 may accommodate one or more hard disk drives for duplication. However, it will be appreciated by those of skill in the art that the number of disk duplicators 224 coupled to image builders 212 & 214 is not limited by the embodiment set forth herein, and may be greater or less than six disk duplicators per system, and will depend on the particular requirements of the user.

Network master disk duplicating systems 200 & 210 may further include an optical indicia (e.g., bar-code) reader 228 and a printer 230. The bar code reader 228 and printer 230 allow duplicated hard disk drives to be identified and inventoried after duplication. For instance, an operator of network master disk duplicating systems 200 & 210 may select a blank hard disk drive to be placed in a disk duplicator 224. An operator console 232 is provided for allowing monitoring and control of the systems 200 & 210 by an operator, user, or the like.

Network master disk duplicating system 200 may be coupled to a central return material database 234 via a network such as an intranet, the Internet, or the like. In exemplary embodiments, central return material database 234 may contain information necessary for duplicating an existing hard disk drive, for example, a failed or corrupted hard disk drive owned by a customer. For example, central return material database 234 may provide one or more drive image definitions defining drive images to be created and stored to hard disk drives, identification information providing contact information for the customer ordering the drive, and the like. Further, the central return material database 234 may keep an inventory of all hard disk drives being duplicated throughout the duplication process.

As shown in FIG. 2A, one or both of image builders 212 & 214 may include an Ethernet adapter or card allowing communication with the central return material database 234 via duplication manager software 236 running on a network server or the like. Alternately, as shown in FIG. 2B, the duplication manager software may be part of the central return material database 234 accessed via the network (e.g., an intranet), in which case no network server is necessary.

Duplication manager 234 includes a database comprising a list of "disk images" and "software components" suitable for use in generating a drive image for the hard disk drive to be replicated. In exemplary embodiments, disk images are comprised of single files defining the base contents of a hard disk partition, while software components are similar change files that can operate on the base image to perform a reconfiguration of the base image. Additionally, file applications and/or settings may be incrementally added to a replacement hard drive. Preferably, each disk image and software component is linked to an identifier such as a part number, serial number, or the like. In exemplary embodiments, duplication manager 234 further comprises tools for managing the database and software for assembling disk images and software components for controlling production of duplicate or replacement hard disk drives by network master disk duplicating systems 200 & 210. Additionally, duplication manager 234 may facilitate entering of new disk images and software components via console 232, and changing or removing existing disk images or software components from the database.

Duplication manager 234 may receive, from the central return material database 228, one or more drive image definitions containing parts lists defining disk images and software components required for hard disk drives to be duplicated. For example, in exemplary embodiments, each drive image definition may contain a list of part numbers referencing a specific disk image and/or one or more software components to be added to the disk image. These components when loaded onto hard disk drive comprise a drive image for the drive.

Upon receiving one or more drive images, the duplication manager 234 may then provide a message to the operator via console 232 indicating an order is ready to be processed (i.e., a drive image has been received for one or more hard disk drives). The operator may then load the appropriate blank hard disk drives into on or more of the disk duplicators 224. For example, the operator may be provided with a part number identifying a particular blank hard disk drive that is substantially identical to the hard disk drive to be duplicated. If more than one order is to be processed, the stations or positions in the disk duplicators 224 in which each blank hard disk drive is to be loaded may also be provided to the operator via console 232.

In exemplary embodiments, drive image definitions are periodically provided to duplication manager 234 via the network connection to the central return material database 228. Alternately, the operator may also initiate an order to build a replacement hard disk drive via the console 232. The operator enters identification information for the duplicate hard disk drive to be produced via console 232, which generates a request to build a hard disk drive. This request is provided to the duplication manager 234. The duplication manager may then search the central return material database 228 for matching hard drive replacement process information, drive image definitions, and the like.

Upon receiving a drive image definition from the central return material database 228, duplication manager 234 may verify the list of software part numbers therein against the list of disk images and software components stored in its database. If any components are not found in the database, duplication manager 234 notifies the central return material database 228 that a hard disk drive conforming to the drive image definition cannot be built. Otherwise, the drive image definition is distributed into a group of identical drive images depending on the number of hard disk drives to be built and the disk duplicators 224 coupled to the system 200.

If the duplication manager 234 determines that the drive image definition can be built, construction of a drive image construction is initiated. Hard drive Fibre Channel tower 216 includes a plurality of fibre hard disk drives divided into three logical groups of Fibre Channel hard disk drives (e.g., "DISK GROUP A" 218, "DISK GROUP B" 220 and "DISK GROUP C" 222). The first group of drives ("DISK GROUP A" 218) is reserved for the database, the disk images and software components, and a "working" area for duplication manager 234. In the embodiment shown in FIGS. 2A and 2B, wherein hard drive Fibre Channel tower 216 includes eight fibre hard disk drives, the first group of drives ("DISK GROUP A" 218) may include two drives. The second group of drives ("DISK GROUP B" 220) is reserved for current operations of the disk duplication software using a current set of drive image definitions. The final group of drives ("DISK GROUP C" 222) is reserved for constructing the hard disk images based on the next set of drive image definitions received. In the embodiment shown in FIGS. 2A and 2B, wherein hard drive Fibre Channel tower 216 includes eight Fibre Channel hard disk drives, the second and third groups of drives ("DISK GROUP B" 220 and "DISK GROUP C" 222) may each include three drives. Additionally, the drives in the second and third groups of drives ("DISK GROUP B" 220 and "DISK GROUP C" 222) may contain at least two logical partitions each having a size of at least 2 GB.

For each drive image definition, duplication manager 234 first determines if the appropriate drive image already exists on one of the drives in the second group ("DISK GROUP B" 220). If the drive image already exists, duplication manager 234 records its location and instructs the operator to position blank hard disk drives in disk duplicators 224, accordingly. If the drive image is determined to not exist, duplication manger 230 then locates and places the appropriate disk image from its database onto one of the unused drives in the second group ("DISK GROUP B" 220). This disk image becomes the master drive for the disk duplicator(s) 224. Duplication manager 234 may then apply any software components whose part numbers are listed in the drive image definition to the drive image on the selected drive in the second group ("DISK GROUP B" 220).

Duplication manager 234 next communicates the list of drive images and their location in the second group ("DISK GROUP B" 220) to the disk duplication software. The disk duplicator software utilizes this information to generate instructions that are provided to the operator via console 232 for placement of blank hard disk drives in the disk duplicators 224, either through a visual interface or the reading of bar codes by bar code reader 228. When the operator has loaded all appropriate blank hard disk drives into disk duplicators 224, the disk duplication software causes the drive images to be copied to the appropriate hard disk drives.

In exemplary embodiments, when copying of drive images to the blank hard disk drives is completed, the disk duplication software indicates the success or failure of the copying process to both duplication manager 234 and the operator (e.g., via console 232). Duplication manager 234 may in turn notify the central return material database 228 of the success or failure of loading of hard disk drives as required by the drive image definition. While the disk duplication software is loading drive images onto hard disk drives placed in one or more of disk duplicators 224, duplication manager 234 does not interact with any drive images located in the second group ("DISK GROUP B" 220). Instead, it initiates the building of a second set of drive images using the third group of drives ("DISK GROUP C" 222). In this manner, the drive images will be available to be copied to hard disk drives when the disk duplication from the second group ("DISK GROUP B" 220) is completed. When the disk duplication software has completed duplication of all drive images from the second group of drives ("DISK GROUP B" 220), or duplication manager 234 has finished construction of drive images using the third groups of drives ("DISK GROUP C" 222), whichever occurs later, duplication manager 234 informs the duplication software that it should begin duplication of drive images from the third group of drives ("DISK GROUP C" 222). Duplication manager 234 communicates the list of drive images and their location in the third group of drives ("DISK GROUP C" 222) to the disk duplication software. The roles of the second and third groups of drives ("DISK GROUP B" 220 and "DISK GROUP C" 222) are then reversed.

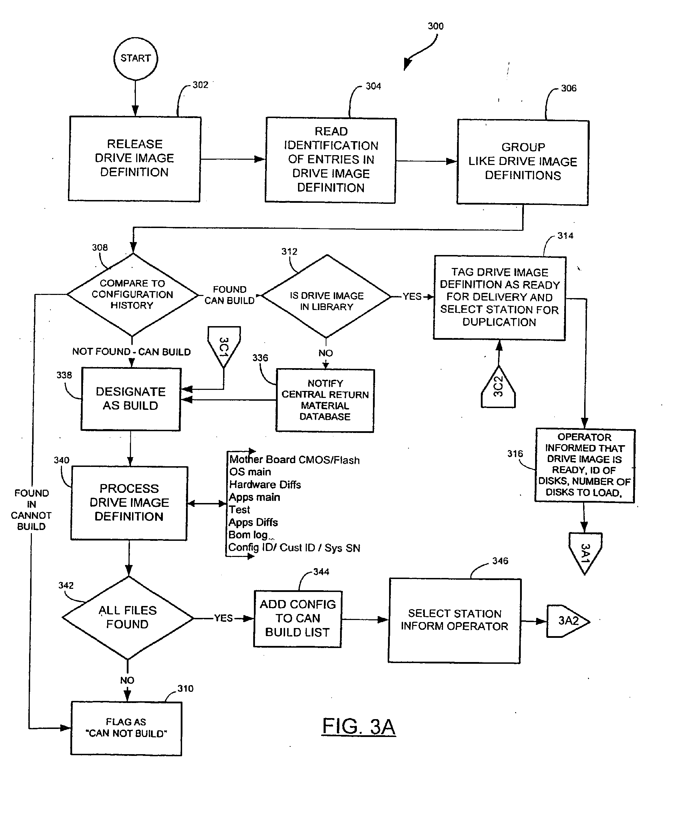

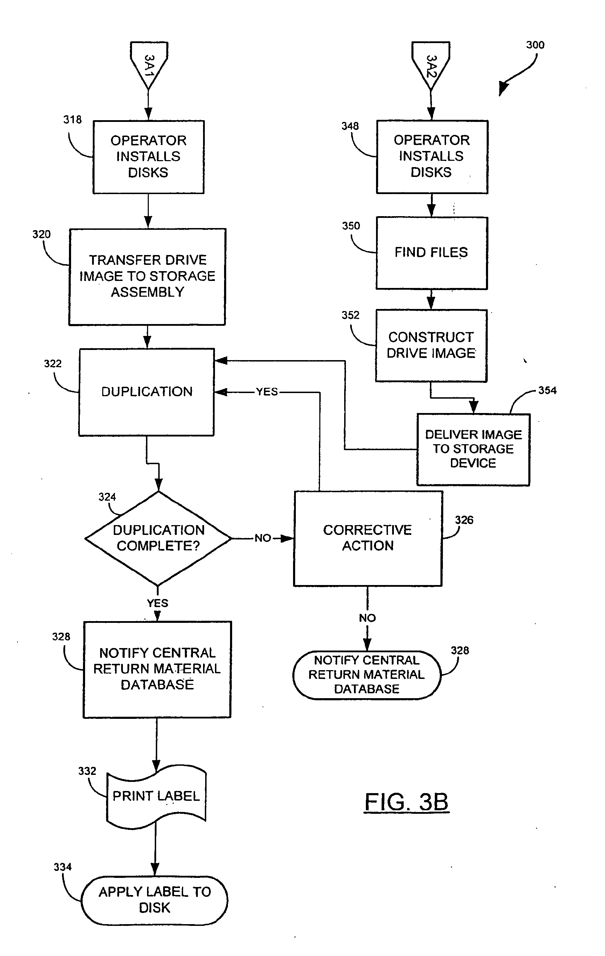

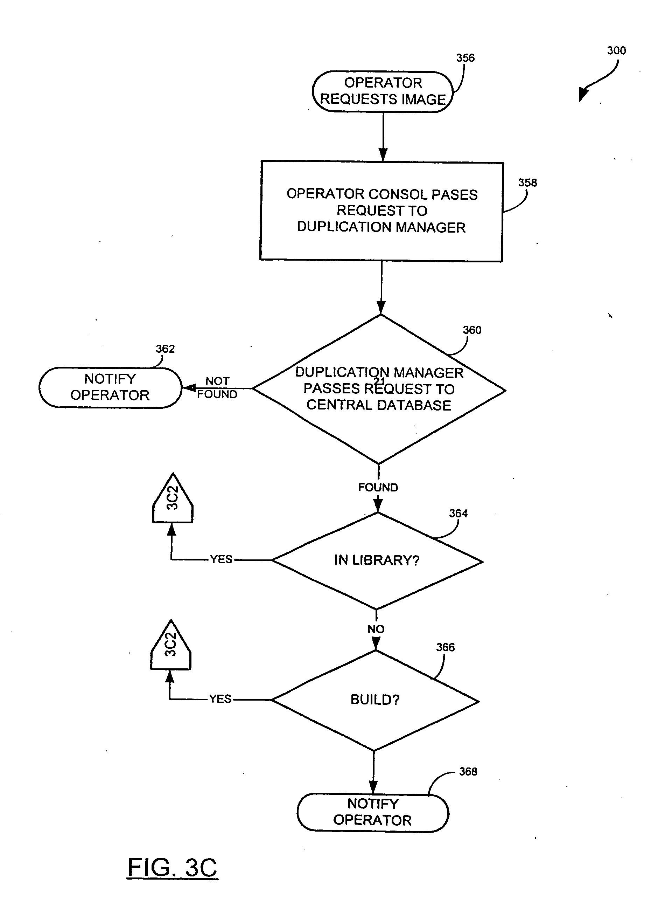

Referring now to FIGS. 3A, 3B and 3C, a manufacturing procedure for duplicating hard disk drives in accordance with an exemplary embodiment of the present invention is described. In the embodiment shown, manufacturing procedure 300 is initiated at step 302 when the central return material database releases a drive image definition to the duplication manager. As discussed in the description of FIGS. 2A and 2B, the drive image definition contains a parts list having entries defining disk images and software components required for hard disk drives to be duplicated. The component identification (i.e., the part number, serial number, or the like) for each entry of the drive image definition parts list is read at step 304 and the drive image definition may be grouped with other like drive image definitions at step 306 to improve efficiency of the duplication process. Next, the drive image definition is compared with a configuration history at step 308 to determine if a drive image in accordance with the drive image definition can be built. In exemplary embodiments, the configuration history may include lists containing drive image definitions that can be built and drive image definitions that cannot be built (e.g., due to software component conflicts, discontinued software components, or the like).

If a determination is made that the desired drive image cannot be built (e.g., the drive image definition is listed as one that cannot be built in the configuration history), the drive image definition is flagged as "can not be built" and the central return material database is so notified at step 310. If a determination is made at step 308 that the desired drive image can be built (e.g., the drive image definition is flagged as one that can be built in the configuration history), a determination is made, at step 312, whether the drive image is in the duplication manager database or library. If the drive image is determined to exist in the duplication manager database or library, the drive image definition is tagged as ready for delivery and a station or stations of one or more disk duplicators are selected for duplication at step 314. The operator informed that the drive image is ready to be loaded at step 316. The operator may also be provided with information necessary to load the appropriate blank hard disk drive or drives into the disk duplicators. In exemplary embodiments, such information may include identifiers such as part numbers, or the like of the blank hard drives, the number of drives to be loaded, the identity of the stations on which the drives are to be loaded, and the like. The operator may then load the appropriate blank hard disk drives into the disk duplicators at step 318.

The drive image is then transferred to the storage assembly from the duplication manager database at step 320 and the duplication process is initiated at step 322. For example, in embodiments of the invention wherein the storage assembly comprises a hard disk drive Fibre Channel tower having a plurality of Fibre Channel hard disk drives arranged into a first group, a second group, and a third group of Fibre Channel hard disk drives, the drive image may be transferred from the duplication manager database stored in the first group of drives, to the second or third group of drives for duplication.
Duplication software may then copy the drive image to the blank hard disk drives loaded in the disk duplicator by the operator. A determination is next made whether the drive image was successfully copied to all hard disk drives loaded in the disk duplicators at step 324. If a determination is made that one or more hard disk drives failed to have a drive image copied to them successfully, corrective action may be taken at step 326. For example, the error may be displayed to the operator, the duplication may be attempted again by repeating step 322, and/or the hard disk drive may be tested for faults.

If the error cannot be corrected, the fault is reported to the central return material database at step 328. If a determination is made that a drive image is successfully copied to each hard disk drive at step 324, the central return material database is notified that the duplication completed successfully at step 330. A label containing a barcode identifying each hard disk drive and drive image is then printed at step 332 and affixed to the hard disk drives by the operator at step 334.

If, at step 312, the drive image is determined to not exist in the duplication manager database or library, the central return material database is notified at step 336 and the drive image definition is designated to be built at step 338. Similarly, if a determination is made that the desired drive image is not found in he configuration history at step 308, the drive image definition may be designated to be built if possible at step 338. The drive image definition is then processed at step 340 to determine if its component parts or files are available in the duplication manager database. If one or more files are determined to be unavailable in the database, at step 342, the drive image definition is flagged as "can not be built" and the central return material database is so notified at step 310. However, if all files defined by the drive image definition are found in the database at step 342, the drive image definition is added to the can build list in the configuration history at step 344. The operator is provided with information necessary to load the appropriate blank hard disk drive or drives into the disk duplicators at step 346. In exemplary embodiments, such information may include identifiers such as part numbers, or the like of the blank hard drives, the number of drives to be loaded, the identity of the stations on which the drives are to be loaded, and the like. The operator may then load the appropriate blank hard disk drives into the disk duplicators at step 348.

Construction of a drive image is then initiated. The duplication manger locates and places the appropriate disk image from its database along with any required software components at step 350 and constructs the disk image at step 352. The completed drive image is then delivered to the storage assembly at step 354. For instance, as described in the discussion of FIGS. 2A and 2B, duplication manger 230 may locate and place the appropriate disk image from its database onto one of the unused drives in the second group ("DISK GROUP B" 220) or third group ("DISK GROUP C" 222). This disk image becomes the master drive for the disk duplicator(s) 224. Duplication manager 234 may then apply any software components whose part numbers are listed in the drive image definition to the drive image on the selected drive in the second group ("DISK GROUP B" 220). The duplication process is then initiated at step 322.

In exemplary embodiments, drive image definitions are periodically provided to the duplication manager via the network connection to the central return material database 228. Alternately, as described in FIG. 3C, the operator may also initiate an order to build a replacement hard disk drive. At step 356, the operator may enter identification information for the duplicate hard disk drive to be produced via his console (see FIGS. 2A and 2B), generating a request to build a hard disk drive. This request is provided to the duplication manager at step 358. The duplication manager may then pass the request to the central return material database to find matching hard drive replacement process information, drive image definitions, and the like at step 360. If no such information is found at step 360, the operator is so notified (e.g., via his console) at step 362. If such information is found, a determination is made, at step 362, whether the drive image is in the duplication manager database or library. If the drive image is determined to exist in the duplication manager database or library, the drive image definition is tagged as ready for delivery and a station or stations of one or more disk duplicators are selected for duplication at step 314. Processing of the drive image then continues as described in steps 316 - 334. If, at step 312, the drive image is determined to not exist in the duplication manager database or library, a determination is made whether the drive image is to be designated to be built at step 364. If the drive image is to be built, processing of the drive image then proceeds to step 338. If, however, it is determined that the drive image is not to be built the operator is notified (e.g., via his console) at step 366.

FIG. 4 illustrates an exemplary architecture of a drive image created by the duplication manager. The image builders 106 & 108 (FIG. 1) build the drive image 400 in software according to a desired drive image definition and deliver that image to a group of disks of the storage assembly 102. Sections of the drive image 400 are discussed in the order in which they are presented in FIG. 4. However, one skilled in the art will readily realize that, in other embodiments, the drive image 400 may have architectures other than the architecture shown in FIG. 4 and described herein without departing from the scope and spirit of the present invention.

Section 402 contains BIOS flash properties. The next two sections, sections 404 and 406, contain the main operating system and the main applications program code or instructions. Hardware characteristics of the information handling system receiving the drive image 400 are addressed by section 408 dealing with the CMOS settings, section 410 including the main BIOS instructions, section 412 supporting LOC information and section 414 supporting desktop parameters for the main operating system.

Section 418 supports information including, but not limited to operating system registers, initialization information and configurations files. Section 420 includes test information. Like section 416, section 420 includes, but is not limited to application system registers, initialization information and configurations files. The last three sections contain an identification of the specific image itself 422, an identification of the customer 424, and a restore image process 426. The identification information provided by sections 422, 424 & 426 allow for future reference of the created drive image 400, which is helpful for trouble shooting problems in the software configuration and in also adding delta images to the previously delivered image in order to upgrade existing applications.

FIG. 5 illustrates an exemplary embodiment of an identification scheme 500 for a drive image structure. In the embodiment shown, the drive image identification scheme 500 comprises a tree structure with a configuration identification number. Also included in the tree structure are underlying identification numbers corresponding to main files and underlying identification numbers corresponding to edited dynamic files (EDF).

More specifically, the identification scheme 500 includes a configuration number 502 identifying what the desired drive image is built from. It is the foundation from which the duplication manager works in creating the desired drive image. Once the configuration number 502 is identified, the main files corresponding to the operating system 504 (e.g., the operating system software) and the desired applications 506 are layered on top of the configuration number basic files 502, edited dynamic files corresponding to registry settings 508, operating system initialization files 510, application EDF files 512.

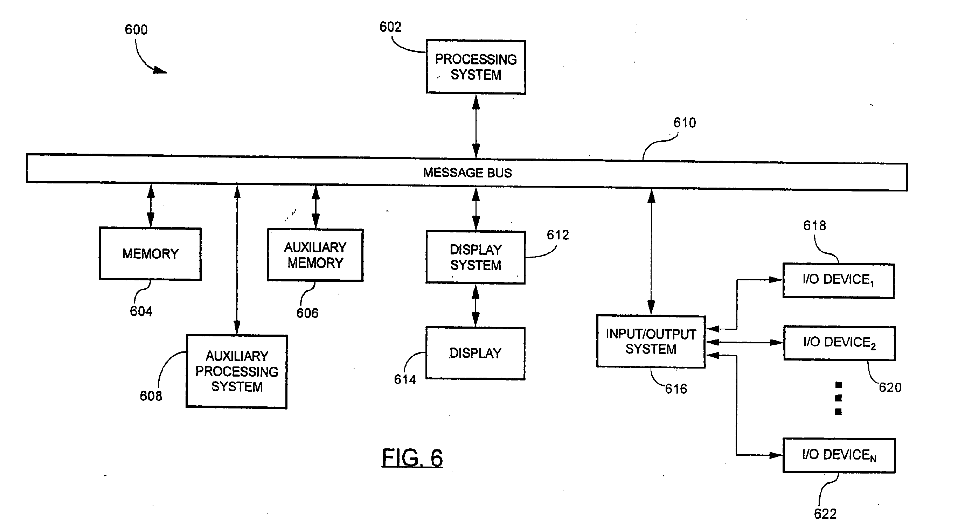

Referring now to FIG. 6, an exemplary hardware system generally representative of the information handling system suitable for use as an image builder (106 & 108 (FIG. 1), 210 & 212 (FIGS. 2A and 2B)), network server supporting duplication manager 234 (FIGS. 2A and 2B), or operator console 232 (FIGS. 2A and 2B) is described. The hardware system 600 is controlled by a central processing system 602. The central processing system 602 includes a central processing unit such as a microprocessor or microcontroller for executing programs, performing data manipulations and controlling the tasks of the hardware system 600. Communication with the central processor 602 is implemented through a system bus 610 for transferring information among the components of the hardware system 600. The bus 610 may include a data channel for facilitating information transfer between storage and other peripheral components of the hardware system. The bus 610 further provides the set of signals required for communication with the central processing system 602 including a data bus, address bus, and control bus. The bus 610 may comprise any state of the art bus architecture according to promulgated standards, for example industry standard architecture (ISA), extended industry standard architecture (EISA), Micro Channel Architecture (MCA), peripheral component interconnect (PCI) local bus, standards promulgated by the Institute of Electrical and Electronics Engineers (IEEE) including IEEE 488 general-purpose interface bus (GPIB), IEEE 696/S-100, and so on. Other components of the hardware system 600 include main memory 604, and auxiliary memory 606. The hardware system 600 may further include an auxiliary processing system 608 as required. The main memory 604 provides storage of instructions and data for programs executing on the central processing system 602. The main memory 604 is typically semiconductor-based memory such as dynamic random access memory (DRAM) and/or static random access memory (SRAM). Other semi-conductor-based memory types include, for example, synchronous dynamic random access memory (SDRAM), Rambus dynamic random access memory (RDRAM), ferroelectric random access memory (FRAM), and so on. The auxiliary memory 606 provides storage of instructions and data that are loaded into the main memory 604 before execution. The auxiliary memory 606 may include semiconductor based memory such as read-only memory (ROM), programmable read-only memory (PROM), erasable programmable read-only memory (EPROM), electrically erasable read-only memory (EEPROM), or flash memory (block oriented memory similar to EEPROM). The auxiliary memory 606 may also include a variety of non-semiconductor-based memories, including but not limited to magnetic tape, drum, floppy disk, hard disk, optical, laser disk, compact disc read-only memory (CD-ROM), write once compact disc (CD-R), rewritable compact disc (CD-RW), digital versatile disc read-only memory (DVD-ROM), write once DVD (DVD-R), rewritable digital versatile disc (DVD-RAM), etc. Other varieties of memory devices are contemplated as well. The hardware system 600 may optionally include an auxiliary processing system 608 which may be an auxiliary processor to manage input/output, an auxiliary processor to perform floating point mathematical operations, a digital signal processor (a special-purpose microprocessor having an architecture suitable for fast execution of signal processing algorithms), a back-end processor (a slave processor subordinate to the main processing system), an additional microprocessor or controller for dual or multiple processor systems, or a coprocessor. It will be recognized that such auxiliary processors may be discrete processors or may be built into the main processor.

The hardware system 600 further includes a display system 612 for connecting to a display device 614, and an input/output (I/O) system 616 for connecting to one or more I/O devices 618, 620, and up to N number of I/O devices 622. The display system 612 may comprise a video display adapter having all of the components for driving the display device, including video memory, buffer, and graphics engine as desired. Video memory may be, for example, video random access memory (VRAM), synchronous graphics random access memory (SGRAM), windows random access memory (WRAM), and the like. The display device 614 may comprise a cathode ray-tube (CRT) type display such as a monitor or television, or may comprise an alternative type of display technology such as a projection-type CRT display, a liquid-crystal display (LCD) overhead projector display, an LCD display, a light-emitting diode (LED) display, a gas or plasma display, an electroluminescent display, a vacuum fluorescent display, a cathodoluminescent (field emission) display, a plasma-addressed liquid crystal (PALC) display, a high gain emissive display (HGED), and so forth. The input/output system 616 may comprise one or more controllers or adapters for providing interface functions between the one or more I/O devices 618-622. For example, the input/output system 616 may comprise a serial port, parallel port, universal serial bus (USB) port, IEEE 1394 serial bus port, infrared port, network adapter, printer adapter, radio-frequency (RF) communications adapter, universal asynchronous receiver-transmitter (UART) port, etc., for interfacing between corresponding I/O devices such as a keyboard, mouse, trackball, touchpad, joystick, trackstick, infrared transducers, printer, modem, RF modem, bar code reader, charge-coupled device (CCD) reader, scanner, compact disc read-only memory (CD-ROM), digital versatile disc (DVD), video capture device, touch screen, stylus, electroacoustic transducer, microphone, speaker, etc. The input/output system 616 and I/O devices 618-622 may provide or receive analog or digital signals for communication between the hardware system 600 of the present invention and external devices, networks, or information sources. The input/output system 616 and I/O devices 618-622 preferably implement industry promulgated architecture standards, including Ethernet IEEE 802 standards (e.g., IEEE 802.3 for broadband and baseband networks, IEEE 802.3z for Gigabit Ethernet, IEEE 802.4 for token passing bus networks, IEEE 802.5 for token ring networks, IEEE 802.6 for metropolitan area networks, and so on), Fibre Channel, digital subscriber line (DSL), asymmetric digital subscriber line (ASDL), frame relay, asynchronous transfer mode (ATM), integrated digital services network (ISDN), personal communications services (PCS), transmission control protocol/Internet protocol (TCP/IP), serial line Internet protocol/point to point protocol (SLIP/PPP), and so on. It should be appreciated that modification or reconfiguration of the hardware system 600 of FIG. 6 by one having ordinary skill in the art would not depart from the scope or the spirit of the present invention.

It is understood that the specific order or hierarchies of steps in the methods disclosed herein are examples of exemplary approaches. Based upon design preferences, it is understood that the specific order or hierarchy of steps in the method can be rearranged while remaining within the scope of the present invention. The attached method claims present elements of the various steps in a sample order, and are not meant to be limited to the specific order or hierarchy presented.

It is believed that the present invention and many of its attendant advantages will be understood by the forgoing description. It is also believed that it will be apparent that various changes may be made in the form, construction and arrangement of the components thereof without departing from the scope and spirit of the invention or without sacrificing all of its material advantages. The form herein before described being merely an explanatory embodiment thereof. It is the intention of the following claims to encompass and include such changes.

## Claims

1. A system for loading software onto a hard disk drive, comprising:
a storage assembly for storing at least one of a predefined drive image and a software component;
an image builder coupled to the storage assembly within a network, for building a drive image for the hard disk drive using at least one of the predefined drive image and the software component, the created drive image being stored by the storage assembly,
wherein the drive image is downloaded to the hard disk drive from the storage assembly via the network.

2. The system as claimed in claim 1, further comprising a second image builder coupled to the first image builder and storage assembly in an arbitrated loop within the network.

3. The system as claimed in claim 1, further comprising a second image builder coupled to the first image builder and storage assembly in an arbitrated loop within the network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives.

4. The system as claimed in claim 1, further comprising a second image builder coupled to the first image builder and storage assembly in an arbitrated loop within the network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives, and wherein the hard disk drive Fibre Channel tower comprises at least eight Fibre Channel hard disk drives arranged into the first, second, and third groups, each of the first, second and third groups having at least two Fibre Channel hard disk drives.

5. The system as claimed in claim 1, further comprising a second image builder coupled to the first image builder and storage assembly in an arbitrated loop within the network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives, and wherein the first group of Fibre Channel hard disk drives are suitable for storage of the predefined drive image and software component, and wherein the second and third are suitable for storage of the created drive image.

6. The system as claimed in claim 1, further comprising a second image builder coupled to the first image builder and storage assembly in an arbitrated loop within the network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives, wherein the first group of Fibre Channel hard disk drives are suitable for storage of the predefined drive image and software component, and wherein the second and third are suitable for storage of the created drive image, and wherein the first image builder builds the drive image by storing the predefined drive image to one of the second group and the third group of Fibre Channel hard disk drives and adding the software component to the predefined drive image.

7. The system as claimed in claim 1, further comprising a second image builder coupled to the first image builder and storage assembly in an arbitrated loop within the network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives, wherein the first group of Fibre Channel hard disk drives are suitable for storage of the predefined drive image and software component, wherein the second and third are suitable for storage of the created drive image, and wherein the first image builder builds the drive image by storing the predefined drive image to one of the second group and the third group of Fibre Channel hard disk drives and adding the software component to the predefined drive image, and wherein the second image builder builds a second drive image by storing one of the predefined drive image and a second predefined drive image to the other of the first group and the second group of Fibre Channel hard disk drives and adding at least one of the software component and a second software component to the stored predefined drive image or second predefined drive image, the second drive image being downloaded to the hard disk drive from the storage assembly via the network.

8. The system as claimed in claim 1, wherein the image builder is provided with a drive image definition, the drive image definition defining a drive image to be built.

9. The system as claimed in claim 1, further comprising at least one disk dupper coupled to the network for receiving the hard disk drive to be loaded.

10. A system for loading software onto a hard disk drive, comprising:
means for storing at least one of a predefined drive image and a software component;
means for receiving a drive image definition defining a drive image to be built;
means, coupled to the storing means in an arbitrated loop network within a network, for building the drive image using at least one of the predefined drive image and the software component, the created drive image being stored by the storing means,
wherein the drive image is downloaded to the hard disk drive from the storing means via the network.

11. The system as claimed in claim 10, wherein the storing means comprises a hard disk drive Fibre Channel tower having a plurality of Fibre Channel hard disk drives arranged into a first group, a second group, and a third group of Fibre Channel hard disk drives.

12. The system as claimed in claim 10, wherein the storing means comprises a hard disk drive Fibre Channel tower having a plurality of Fibre Channel hard disk drives arranged into a first group, a second group, and a third group of Fibre Channel hard disk drives, and wherein the hard disk drive Fibre Channel tower comprises at least eight Fibre Channel hard disk drives arranged into the first, second, and third groups, each of the first, second and third groups having at least two of the Fibre Channel hard disk drives.

13. The system as claimed in claim 10, wherein the storing means comprises a hard disk drive Fibre Channel tower having a plurality of Fibre Channel hard disk drives arranged into a first group, a second group, and a third group of Fibre Channel hard disk drives, and wherein the first group of Fibre Channel hard disk drives are suitable for storage of the predefined drive image and software component.

14. The system as claimed in claim 10, wherein the storing means comprises a hard disk drive Fibre Channel tower having a plurality of Fibre Channel hard disk drives arranged into a first group, a second group, and a third group of Fibre Channel hard disk drives, wherein the hard disk drive Fibre Channel tower comprises at least eight Fibre Channel hard disk drives arranged into the first, second, and third groups, each of the first, second and third groups having at least two of the Fibre Channel hard disk drives, and wherein the second and third groups are suitable for storage of the created drive image.

15. The system as claimed in claim 10, wherein the storing means comprises a hard disk drive Fibre Channel tower having a plurality of Fibre Channel hard disk drives arranged into a first group, a second group, and a third group of Fibre Channel hard disk drives, wherein the hard disk drive Fibre Channel tower comprises at least eight Fibre Channel hard disk drives arranged into the first, second, and third groups, each of the first, second and third groups having at least two of the Fibre Channel hard disk drives,
wherein the second and third groups are suitable for storage of the created drive image, and wherein the drive image is created by storing the predefined drive image to one of the second group and the third group of Fibre Channel hard disk drives and adding the software component to the predefined drive image.

16. The system as claimed in claim 10, wherein the storing means comprises a hard disk drive Fibre Channel tower having a plurality of Fibre Channel hard disk drives arranged into a first group, a second group, and a third group of Fibre Channel hard disk drives, wherein the hard disk drive Fibre Channel tower comprises at least eight Fibre Channel hard disk drives arranged into the first, second, and third groups, each of the first, second and third groups having at least two of the Fibre Channel hard disk drives,
wherein the second and third groups are suitable for storage of the created drive image,
wherein the drive image is created by storing the predefined drive image to one of the second group and the third group of Fibre Channel hard disk drives and adding the software component to the predefined drive image, and wherein a second drive image is created by storing one of the predefined drive image and a second predefined drive image to the other of the first group and the second group of Fibre Channel hard disk drives and adding at least one of the software component and a second software component to the stored predefined drive image or second predefined drive image, the second drive image being downloaded to the hard disk drive from the storage assembly via the network.

17. The system as claimed in claim 10, further comprising means, coupled to the network, for receiving the hard disk drive to be loaded.

18. A method for loading software onto a hard disk drive, comprising:
storing at least one of a predefined drive image and a software component on a storage assembly;
receiving a drive image definition defining a drive image to be created;
building the drive image using at least one of the predefined drive image and the software component, the created drive image being stored by the storage assembly; and
downloading the built drive image directly to the hard disk drive from the storage assembly via a network.

19. The method as claimed in claim 18, wherein the step of receiving the drive image definition comprises receiving the drive image definition via the network.

20. The method as claimed in claim 18, wherein the storage assembly comprises a hard disk drive Fibre Channel tower having a plurality of Fibre Channel hard disk drives arranged into a first group, a second group, and a third group of Fibre Channel hard disk drives, and wherein the first group of Fibre Channel hard disk drives are suitable for storage of the predefined drive image and software component and the second and third are suitable for storage of the created drive image.

21. The method as claimed in claim 18, wherein the storage assembly comprises a hard disk drive Fibre Channel tower having a plurality of Fibre Channel hard disk drives arranged into a first group, a second group, and a third group of Fibre Channel hard disk drives, and wherein the first group of Fibre Channel hard disk drives are suitable for storage of the predefined drive image and software component and the second and third are suitable for storage of the created drive image, and wherein the step of building the drive image further comprises storing the predefined drive image to one of the second group and the third group of Fibre Channel hard disk drives and adding the software component to the predefined drive image.

22. The method as claimed in claim 18, wherein the storage assembly comprises a hard disk drive Fibre Channel tower having a plurality of Fibre Channel hard disk drives arranged into a first group, a second group, and a third group of Fibre Channel hard disk drives, and wherein the first group of Fibre Channel hard disk drives are suitable for storage of the predefined drive image and software component and the second and third are suitable for storage of the created drive image, the method further comprising building a second drive image for a second hard disk drive by storing one of the predefined drive image and a second predefined drive image to the other of the second group and the third group of Fibre'Channel hard disk drives and adding at least one of the software component and a second software component to the stored predefined drive image or second predefined drive image, the second drive image being downloaded to the hard disk drive from the storage assembly via the network.

23. The method as claimed in claim 18, wherein the storage assembly comprises a hard disk drive Fibre Channel tower having a plurality of Fibre Channel hard disk drives arranged into a first group, a second group, and a third group of Fibre Channel hard disk drives, and wherein the first group of Fibre Channel hard disk drives are suitable for storage of the predefined drive image and software component and the second and third are suitable for storage of the created drive image, the method further comprising building a second drive image for a second hard disk drive by storing one of the predefined drive image and a second predefined drive image to the other of the second group and the third group of Fibre Channel hard disk drives and adding at least one of the software component and a second software component to the stored predefined drive image or second predefined drive image, the second drive image being downloaded to the hard disk drive from the storage assembly via the network and downloading the built second drive image directly to the second hard disk drive from the storage assembly via the network.

24. A system for loading software onto a hard disk drive, comprising:
a storage assembly for storing at least one of a predefined drive image and a software component;
an image builder coupled to the storage assembly within a high-speed network, for building a drive image for the hard disk drive using at least one of the predefined drive image and the software component, the created drive image being stored by the storage assembly;
a disk duplicator coupled to the image builder via the high-speed network,
wherein the drive image is utilized as the master drive for the duplication station via the high-speed network.

25. The system as claimed in claim 24, further comprising a second image builder coupled to the first image builder and storage assembly in an arbitrated loop within the high-speed network.

26. The system as claimed in claim 24, further comprising a second image builder coupled to the first image builder and storage assembly in an arbitrated loop within the high-speed network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives.

27. The system as claimed in claim 24, further comprising a second image builder coupled to the first image builder and storage assembly in an arbitrated loop within the high-speed network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives, and wherein the hard disk drive Fibre Channel tower comprises at least eight Fibre Channel hard disk drives arranged into the first, second, and third groups, each of the first, second and third groups having at least two Fibre Channel hard disk drives.

28. The system as claimed in claim 24, further comprising a second image builder coupled to the first image builder and storage assembly in an arbitrated loop within the high-speed network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives, and wherein the first group of Fibre Channel hard disk drives are suitable for storage of the predefined drive image and software component, and wherein the second and third are suitable for storage of the created drive image.

29. The system as claimed in claim 24, further comprising a second image builder coupled to the first image builder and storage assembly in an arbitrated loop within the high-speed network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives, wherein the first group of Fibre Channel hard disk drives are suitable for storage of the predefined drive image and software component, and wherein the second and third are suitable for storage of the created drive image, and wherein the first image builder builds the drive image by storing the predefined drive image to one of the second group and the third group of Fibre Channel hard disk drives and adding the software component to the predefined drive image.

30. The system as claimed in claim 24, further comprising a second image builder coupled to the first image builder and storage assembly in an arbitrated loop within the high-speed network, wherein the arbitrated loop comprises a fibre arbitrated loop and the storage assembly comprises a hard disk drive Fibre Channel tower having a plurality of Fibre Channel hard disk drives arranged into a first group, a second group, and a third group of Fibre Channel hard disk drives, wherein the first group of Fibre Channel hard disk drives are suitable for storage of the predefined drive image and software component, wherein the second and third are suitable for storage of the created drive image, and wherein the first image builder builds the drive image by storing the predefined drive image to one of the second group and the third group of Fibre Channel hard disk drives and adding the software component to the predefined drive image, and wherein the second image builder builds a second drive image by storing one of the predefined drive image and a second predefined drive image to the other of the first group and the second group of Fibre Channel hard disk drives and adding at least one of the software component and a second software component to the stored predefined drive image or second predefined drive image, the second drive image being downloaded to the hard disk drive from the storage assembly via the high-speed network.

31. The system as claimed in claim 24, wherein the image builder is provided with a drive image definition, the drive image definition defining a drive image to be built.

32. The system as claimed in claim 24, further comprising at least one disk dupper coupled to the high-speed network for receiving the hard disk drive to be loaded.
